# EUROPEAN PATENT SPECIFICATION

(11) **EP 1 240 815 B1**
(45) Date of publication and mention of the grant of the patent: **19.01.2005**
(21) Application number: 98904185.0
(22) Date of filing: 27.02.1998
(51) Int. Cl.: A01B 61/04, A01B 35/22

(54) **SELF-ADJUSTABLE FIXING DEVICE FOR AGRICULTURAL MACHINES**
SELBSTJUSTIERENDE STELLVORRICHTUNG FÜR LANDWIRBSCHAFTLICHE MASCHINEN
DISPOSITIF DE FIXATION A REGLAGE AUTOMATIQUE POUR MACHINES AGRICOLES

(30) Priority: 28.02.1997 ES 9700557 U
(43) Date of publication of application: 18.09.2002
(73) Proprietor: Cantalejo Colilla, Jesus, 45595 Toledo (ES)
(72) Inventor: Cantalejo Colilla, Jesus, 45595 Toledo (ES)
(86) International application number: PCT/ES1998/000050
(87) International publication number: WO 1998/037750

(56) References cited:
- ES-U- 269 546
- FR-A- 2 310 687
- FR-A- 2 548 515
- US-A- 2 850 956
- US-A- 3 414 252
- US-A- 4 073 347
- US-A- 4 078 615
- US-A- 4 530 406

## Description

### OBJECT OF THE INVENTION

The present specification refers to an application for a Patent of Invention related to a self-adjusting attachment device for agricultural machinery, its evident objective lies on being configurated as an attachment device, which permits its appropriate self-adjustment on agricultural machinery, specifically on various farming equipments for final ploughing, for ploughs or for seed drills, coupled to a chassis which is pulled by a tractor.

### SCOPE OF THE INVENTION

This invention is applicable within the industry devoted to the manufacture of agricultural machinery, and specifically within the industry devoted to the manufacture of attachment devices which are applicable to this type of machineries.

### BACKGROUND OF THE INVENTION

The applicant is aware of the existence of a plurality of devices, apparatus, elements and systems, such as for example, the "chisel system" which, whilst being suitable for pulling on different elements applicable on tractors, have the disadvantage that the hooks of the plough or seed drill are attached to the tractor by means of a bolt on the bottom part, specifically on the hinge zone, and it has been verified that in time, a substantial clearance appears, producing a side rocking movement.

Its also Known in the State of the Art the solution described in the patent US 4078615 where the problem of attaching an agricultural device, for example a plough, to a pulling machine like a tractor consisting essentially of two pieces connected by a hinge. This solution presents the inconvenient that with the time the connection becomes loose and in use it appears a rocking movement which influences negatively the results of the ploughing.

The connection of the present invention allows a greater degree of freedom, which solves the problem set above.

The evident solution for the existing problem would be that of counting with a self-adjusting attachment device which shall obviate the problem at present in existence in this matter.

However, there is no knowledge up to the moment, of the existence of an invention which is provided with the characteristics pointed out as suitable.

### DESCRIPTION ON THE INVENTION

The self-adjusting attachment device for agricultural machinery proposed by the invention, constitutes in itself, an evident novelty within its scope of application, since in view of the incorporation of this device, the placements of the attachment on the upper part by means of a flat slot is achieved, gaining the advantage that when a pull or greater force is conducted, it achieves that the element located on the upper part remains appreciably flatter and attached, without the existence of side rocking movements.

In a more specific manner, the self-adjusting attachment device for agricultural machinery which is the object of the invention is constituted as from a body, which placed vertically, presents two emerging projections covering the adaptation or union area on the actual pulling body, including a vertical screw which empowered with a nut, achieves in a precise manner, the union on the pulling element.

The part which adapts to the front face of the element on the tractor, presents two side walls of trapezoidal plan, on which a flat part is found housed on its central zone, slightly curved on its lower zone, and appreciably curved in sinusoidal and hollow front view configuration on the upper part, on which the emerging end of a plate is coupled, which is completely flat on its central zone and which presents an angular deformation, coupled on the upper curved area, specifically inside the concave part located on the upper part, presenting an emerging projection on the lower zone, which, in collaboration with two angular cross pieces, permit the attachment on the lower zone of the bar of a plough or like elements.

From the central zone of the body which is coupled on the pulling element, a cylindrical projection emerges, attached to the same by means of an element constituted by a nut or the like, on which a helicoidal spring is externally coupled, which, on the opposite end presents an attachment and adjusting part which is fixed to the spring by means of a double, conventional, hexagonal threaded element, or any other considered suitable.

In this way, it achieves that the spring with the internal pin, maintains all the parts attached and permits the pressure when it is substantially great, to yield in vertical ascending direction, overcoming all the obstacles and consequently obtaining an appreciably superior performance in relation to the attachment devices known up to the present.

The invention presents the possibility that due to the hinge configurated by direct abutment and without the existence of any bolt whatsoever, it overcomes a plurality of obstacles, and in view of the existence of the attachment grip to the frame, configurated on the fixed lower and upper sheet, it is the one which is moveable by means of a hinge, constituted by the internal pin, which has the advantage that the pushing and pulling force is supported by the actual lower sheet, which is attached, on the contrary to the conventional systems, in suitable manner so that the lower sheet is moveable.

The invention allows the possibility of being used in a plurality of farming equipments, such as has been previously indicated, with independence from whether they are for final ploughing, ploughs or for seed drills, in which the spring is appreciably more sensitive, or the distance from the upper slot to the spring is shorter.

It must also be indicated that the invention considers the possibility that instead of being attached on the upper part by pressure inside the slot, it can be placed in a hinge which is appreciably wider in the upper part.

### DESCRIPTION OF THE DRAWINGS

In order to complement the description which is being made, and with the object of helping to a better understanding of the characteristics of the invention, the present specification is enclosed, forming integral part of the same, with two sheets of drawings in which, with illustrative and non limitative character, the following has been represented:

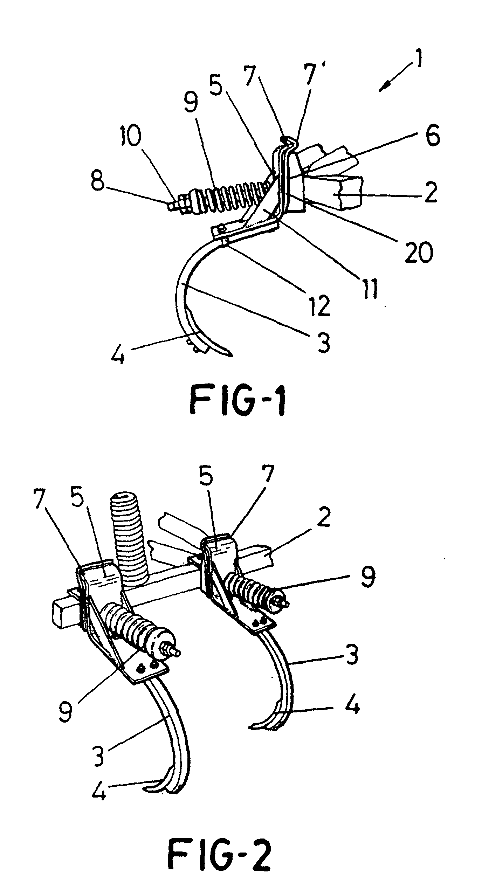

Figure 1 shows a perspective view of the improved attachment device, applicable to diverse agricultural equipments.
Figure 2 corresponds to a view, also in perspective, taken on the lower zone, of the manner of placement of the device represented in figure 1, on a pulling element constituted by a tractor or the like.

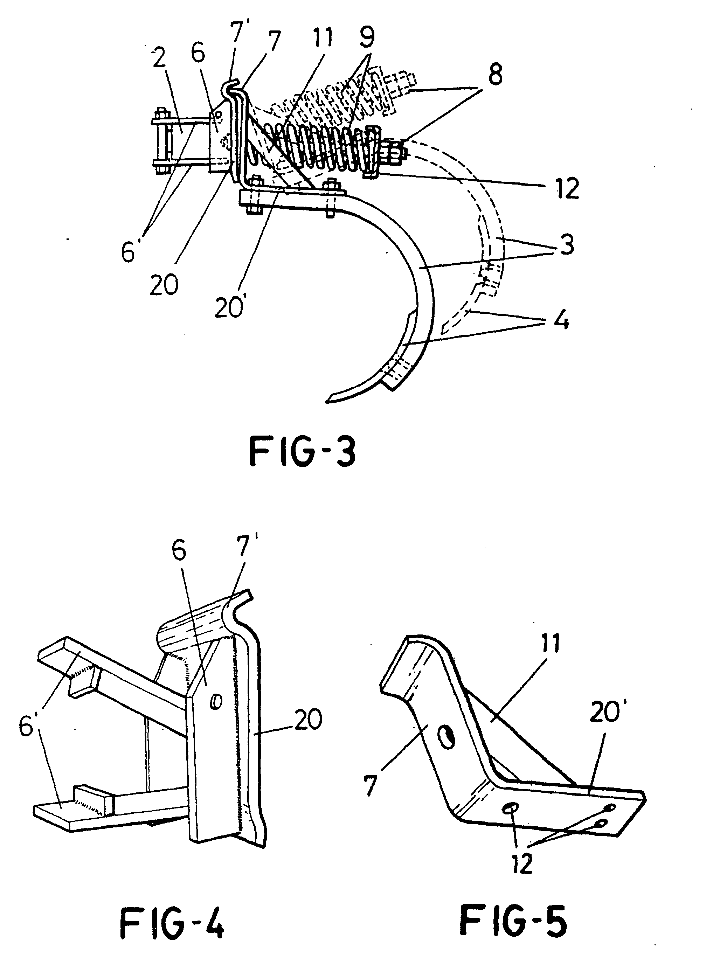

Figure 3 corresponds to a side elevational view of the object represented in the previous figures.
Figure 4 shows a view of the part attached to the actual tractor.
Figure 5 shows a perspective view of the part which is coupled to the object represented in figure 4 and which, in turn supports the element which acts on the soil.

### PREFERRED EMBODIMENT OF THE INVENTION

In view of said figures, it can be observed how the improved attachment device, applicable in diverse agricultural equipments (1) is constituted as from the attachment on a pulling body (2) of two side parts (6)having a trapezoidal side configuration, from which two horizontal and parallel projections (5') emerge, between which the dragging part (2) is coupled by means of the use as attachment nexus of a screw with a nut placed vertically (not referenced), presenting on the front zone of the body (5), an area attached to the same by conventional means which is semi-vertically placed, and on which, a concave deformation (7') exists on the upper part, the concave zone of which is to be found confronted with the area opposite the operational trajectory, said part (20) being provided on the lower zone, with a slight curvature.

On the curved and concave area (7'), the end of a further part (7) is housed, which adopts the angular configuration on the upper zone, which it confronts, presenting on the lower zone, a projection (20') on the base of which perforations (12) exist, with the purpose of coupling different elements on the same, such as for example, bars (3) which carry complementary parts (4).

The union of the front parts (20) and the further part (7) is conducted by means of the existence on both parts of a hole on its middle zone, through which stud (8) passes, which, on the internal area of the side parts (6) is provided with a coupling nut, attaching on its emerging surface after the passage through parts (20) and (7) of a helicoidal spring (9), which attached by means of a piece (12) and with the help of nuts (8), achieves the appropriate union of the attachment nexus to the tractor (2), and in turn achieves a mobility in all directions, with the help of the helicoidal spring (9), the further part (7), being reinforced with angular cross pieces (11), which are attached on the external face of the further part (7), and in turn are finished off on their propections (20'), on which, by means of conventional screwing elements, and with the coupling of nuts, the elements which act on the soil are attached.

Obviously, this application achieves the purpose that in the case of the existence of some obstacle, the union of the parts (20) and the further part (7), with the collaboration of the deformation (7') acts as a hinge which overcomes the obstacles existing on the soil, without at any time, breaking the bodies joined to the actual dragging or attachment nexus.

It is not considered necessary to make this description more extensive in order that any expert in the art may understand the scope of the invention and the advantages derived from the same.

The materials, shape, size and arrangement of the elements are capable of variation, provided this does not suppose an alteration in the essentiality of the invention.

The terms in which this specification has been described shall always be taken in a wide non limitative sense.

## Claims

1. Self-adjusting attachment device for agricultural machinery, comprising a body with two side parts (6) having a trapezoidal side configuration, place vertically and mutually parallel and joined at their front side by a front part (20)**characterised in that** said front part (20) presents a central perforation and comprises on its upper part a concave deformation (7'), the deformation or concavity facing oppositely away from the side parts (6), said body further comprising two horizontal projections (6') between which a pulling element (2) can be attached and locked by a conventional screw and nut connection.

2. Self-adjusting attachment device for agricultural machinery according to claim 1, **characterised in that** the front part (20) presents a slightly curved lower extremity and **in that** a further part (7) is fastened to said front part (20), said further part (7) being provided with:
- an angular deformation on its upper part for coupling with the concave deformation (7') of the front part (20);
- a lower extension at an angle of 90° (20') and provided with perforations (12);
- a perforation located on its central zone and corresponding with the one located on the central zone of the front part (20).

3. Self-adjusting attachment device for agricultural machinery, according to claim 2, **characterised in that** the front part (20) and the further part (7) are joined to each other by means of a threaded stud (8) passing through the corresponding central perforations of both parts, said threaded stud (8) being provided at the end facing the front part (20) with a locking nut located between the side parts (6) if such part (20) and at the other end with a locking part with locking nuts for locking a helicoidal spring (9) wounded around said threaded stud (8).

4. Self-adjusting attachment device for agricultural machinery, according to claim 2 or 3, **characterised in that** the further part (7) is provided with angular cross pieces (11) connecting its two sections connected at a 90° angle and is placed on one side of the helicoidal spring (9).

## Patentansprüche

1. Selbsteinstellende Befestigungsvorrichtung für landwirtschaftliche Maschinen, **dadurch gekennzeichnet, dass** diese aus einem Körper 6 besteht, der aus zwei Bauteilen gebildet ist, welche die trapezoidförmige Seitenkonfiguration annehmen, die senkrecht und parallel vorliegen, die am stirnseitigen Bereich durch einen eine zentrale Perforation (20) aufweisenden Körper gebunden sind, der im oberen Bereich eine konkave Verformung (7') aufweist, Verformung oder Konkavität, die in Gegenrichtung der Bewegung des die Vorrichtung ziehenden Körpers ausgerichtet ist, wobei dieser von den am Bauteil (20) gebundenen Bauteilen (6) gebildete Körper über zwei parallele horizontale Fortsätze (6') verfügt, zwischen welchen das Zugsverbindungselement (2) befestigt wird, wobei dieser durch eine konventionelle Schraube mit Mutter zurückgehalten wird.

2. Selbsteinstellende Befestigungsvorrichtung für landwirtschaftliche Maschinen nach Anspruch 1, **dadurch gekennzeichnet, dass** am Bauteil (20), das am oberen Teil mit der konkaven Verformung (7') versehen und im unteren Teil leicht gebogen ist, ein Bauteil (7) angebaut ist, das eine winkelförmige Verformung im oberen Teil aufweist, die am konkaven Bereich (7') des Bauteiles (20) koppelt, wobei es über einen unteren mit Perforationen (12) versehenen, um 90°gebogenen Fortsatz (20') verfügt und dieses Bauteil (7) im zentralen Bereich mit einer Perforation versehen ist, die mit jener im zentralen Bereich des Bauteiles (20) zusammenfällt.

3. Selbsteinstellende Befestigungsvorrichtung für landwirtschaftliche Maschinen nach den vorhergehenden Ansprüchen, **dadurch gekennzeichnet, dass** die Bauteile (20) und (7) mit einer Stiftschraube (8), die mit einer zwischen den vorstehenden Bereichen (6) des Bauteiles (20) vorhandenen Haltemutter versehen ist, miteinander gebunden werden, die durch die im Bauteil (7) vorhandene Perforation hindurchgeht, wobei in ihrem äußeren Bereich eine Schraubenfeder (9) vorhanden ist, die am Ende, das dem Ende zur Befestigung durch die von den Bauteilen (6) gebildeten Flächen gegenüberliegt, einen von Muttern (8) zurückgehaltenen Haltebauteil (8) aufweist.

4. Selbsteinstellende Befestigungsvorrichtung für landwirtschaftliche Maschinen nach den vorhergehenden Ansprüchen, **dadurch gekennzeichnet, dass** das Bauteil (7) im Bereich der Verbindung mit der winkelförmigen Fläche (20') Winkelstreben (11) aufweist, die an den Seiten der die Stiftschraube (8) abdeckende Feder (9) angebracht sind.

## Revendications

1. Dispositif de fixation auto-ajustable pour machinerie agricole, **caractérisé en ce qu'**il est constitué à partir d'un corps (6) constitué de deux pièces adoptant la configuration latérale trapézoïdale, situées en verticale et en parallèle, unies dans la zone frontale par un corps présentant une perforation (20) centrale, et **en ce que** dans la partie supérieure il présente une déformation (7') concave dont la déformation ou concavité se trouve en regard dans le sens opposé à celui de la marche du corps qui entraîne le dispositif, ce corps formé par les pièces (6), unies à la pièce (20), disposant de deux prolongements (6') horizontaux en parallèle, entre lesquels est fixé le lien de traction (2), celui-ci étant retenu par une vis à écrou conventionnelle.

2. Dispositif de fixation auto-ajustable pour machinerie agricole, selon la revendication 1, **caractérisé en ce qu'**adossée à la pièce (20) pourvue de la déformation (7') concave, sur la partie supérieure et légèrement cintrée sur la partie inférieure, se trouve située une pièce (7), qui présente une déformation angulaire sur la partie supérieure, qui s'accouple dans la zone (7') concave de la pièce (20), en disposant d'un prolongement (20')inférieur formant un angle de 90° pourvue de perforations (12), cette pièce (7) étant pourvue dans la zone centrale d'une perforation coïncidant avec celle existant dans la zone centrale de la pièce (20).

3. Dispositif de fixation auto-ajustable pour machinerie agricole, selon les revendications antérieures, **caractérisé en ce que** les pièces (20) et (7), sont unies entre elles au moyen d'un goujon (8) fileté, qui se trouve pourvu d'un écrou de retenue existant entre les zones (6) émergentes de la pièce (209, qui a travers la perforation existant dans la pièce (7), en recevant dans sa zone externe un ressort (9) hélicoïdal, à l'extrémité duquel opposée à celle de fixation par la zone formée par les pièces (6), il présente une pièce (8) de retenue, retenue par des écrous (8).

4. Dispositif de fixation auto-ajustable pour machinerie agricole, selon les revendications antérieures, **caractérisé en ce que** la pièce (7), présente dans le lien d'union avec la zone (20') angulaire des traverses (11) angulaires, situées co-latéralement au ressort (9) qui recouvre le goujon (8).
